Europäisches Patentamt

European Patent Office

Office européen des brevets

(19)

(11) Veröffentlichungsnummer : **0 529 603 B1**

## (12) EUROPÄISCHE PATENTSCHRIFT

(45) Veröffentlichungstag der Patentschrift :
**14.06.95 Patentblatt 95/24**

(51) Int. Cl.⁶ : **G01J 3/453**

(21) Anmeldenummer : **92114530.6**

(22) Anmeldetag : **26.08.92**

(54) **Interferometer nach Michelson.**

(30) Priorität : **30.08.91 DE 4128911**
**04.11.91 DE 4136300**

(43) Veröffentlichungstag der Anmeldung :
**03.03.93 Patentblatt 93/09**

(45) Bekanntmachung des Hinweises auf die
Patenterteilung :
**14.06.95 Patentblatt 95/24**

(84) Benannte Vertragsstaaten :
**DE FR GB IT NL SE**

(56) Entgegenhaltungen :
**EP-A- 0 411 250**
**EP-A- 0 443 477**
**DE-A- 3 920 117**
**IEEE TRANSACTIONS ON GEOSCIENCE AND**
**REMOTE SENSING, Bd. GE-21, Nr. 3, Juli 1983,**
**New York, US, P.BURKERT ET AL: "A Com-**
**pact High-Resolution Michelson Interferome-**
**ter for Passive Atmospheric Sounding"**

(73) Patentinhaber : **Deutsche Forschungsanstalt**
**für Luft- und Raumfahrt e.V.**
**Linder Höhe**
**Postfach 90 60 58**
**D-51126 Köln (DE)**

(72) Erfinder : **Jansen, Burkhard**
**Finkenweg 10**
**W-4517 Hilter 1 (DE)**
Erfinder : **Haschberger, Peter**
**Berg-Strasse 26**
**W-8035 Gauting (DE)**
Erfinder : **Tank, Volker, Dr.**
**Stegener-Strasse 4**
**W-8088 Eching (DE)**

(74) Vertreter : **von Kirschbaum, Albrecht, Dipl.-Ing.**
**Patentanwalt,**
**Postfach 15 20**
**D-82102 Germering (DE)**

## Beschreibung

Die Erfindung betrifft ein Interferometer nach Michelson nach dem Oberbegriff des Patentanspruchs und betrifft insbesondere ein Interferometer nach Michelson, das bei der Fourier-Transform-Spektroskopie (FTS) verwendet wird, bei welcher optische Wegdifferenzen durch rotierende Retroreflektoren erzeugt werden.

Es sind Michelson-Interferometer, welche auch als "Fourier-Spektrometer" bezeichnet werden bekannt, bei welchen optische Wegdifferenzen durch rotierende Retroreflektoren erzeugt werden (beispielsweise DE 40 05 491 Al). Dabei werden exzentrisch und geneigt "nutierende" Retroreflektoren verwendet. Zur Erzeugung größerer optischer Wegdifferenzen, also einer höheren spektralen Auflösung, werden zwei oder mehr Retroreflektoren in eine - bezogen auf die optische Wegänderung in beiden Interferometerarmen - asynchrone Rotation versetzt, wobei eine feste Phasenbeziehung der verschiedenen Drehbewegungen zueinander eingehalten werden muß.

Die bekannten Michelson-Interferometer mit rotierenden Retroreflektoren weisen jedoch folgende Nachteile auf:

1. Zur Erzeugung einer hohen spektralen Auflösung kann das Interferometer nicht mit nur einem Reflektor betrieben werden, sondern es sind zwei oder mehr dieser relativ teuren Elemente notwendig.

2. Zur erforderlichen Einhaltung der festen Phasenbeziehung der verschiedenen Drehbewegungen der zwei oder mehr Retroreflektoren zueinander müssen aufwendige Maßnahmen getroffen werden. Eine sehr vorteilhafte Lösung ist der Antrieb jedes Retroreflektors mit einem eigenen Schrittschaltmotor und die "elektrische Kopplung" aller Motoren untereinander mittels nur eines gemeinsamen Steuertaktes für alle Motoren. Dies wiederum hat aber folgende Nachteile: Die mechanischen Vibrationen durch den Schrittbetrieb der Motoren übertragen sich auf den gesamten Aufbau in einer für das Meßsignal störenden Weise; diese Vibrationen müssen daher durch zusätzliche aufwendige, mechanische Dämpfungsmaßnahmen behoben werden. Ferner wird durch jeden zusätzlichen Antriebsmotor der gesamte Aufwand erhöht. Außerdem sind Schrittschaltmotoren grundsätzlich teurer als vergleichbare Gleichspannungsmotoren, welche für den Betrieb mit nur einem Retroreflektor ausreichen.

Wenn zwei oder mehr Retroreflektoren von nur einem Motor angetrieben werden, so ist eine Kupplung über ein Getriebe erforderlich. Dadurch wird wiederum der Aufwand größer und durch ein nicht vollständig ausschließbares Getriebespiel und eine -vibration kommen zusätzliche Störquellen in den Aufbau.

3. Durch jeden weiteren Retroreflektor führen dessen optische Fehler zu einer zusätzlichen Verschlechterung der Qualität des optischen Signals des Geräts. Dies könnte nur durch Retroreflektoren extrem hoher Güte vermieden werden; die Folge wäre jedoch ein extrem teures Gerät.

4. Um bei den bekannten Interferometern mit nur einem rotierenden Retroreflektor unerwünscht große, mechanische Dimensionen des Geräts zu vermeiden, ist auch im zweiten Interferometerarm ein (allerdings) fester Retroreflektor installiert, durch welchen vor allem der optische Weg gefaltet wird, und dadurch eine geringe mechanische Baugröße ermöglicht wird. Dadurch ergeben sich jedoch alle vorstehend schon beschriebenen Nachteile, welche auf die Verwendung eines zweiten Retroreflektors zurückzuführen sind.

Der Erfindung liegt die Aufgabe zugrunde, ein Interferometer nach Michelson zu schaffen, das mit relativ geringem Aufwand eine hohe Auflösung ermöglicht. Gemäß der Erfindung ist dies bei einem Interferometer nach Michelson nach dem Oberbegriff des Patentanspruchs durch die Merkmale in dessen kennzeichnenden Teil erreicht.

Gemäß der Erfindung ist ein Interferometeraufbau geschaffen, bei welchem eine hohe spektrale Auflösung mit einem geringen technischen Aufwand realisiert ist. Aufgrund des verhältnismäßig einfachen Aufbaus ist eine Auswuchtung problemlos durchzuführen. Ferner trifft das Strahlenbündel im Betrieb nur auf Spiegelflächen gleicher Neigung, so daß keine wechselnden Polarisationen auftreten können.

Das Interferometer enthält nur einen rotierenden Retroreflektor; die hohe, mit einem geringen technischen Aufwand erreichte, spektrale Auflösung entspricht dabei derjenigen, welche sonst oft nur mit zwei rotierenden Retroreflektoren erreichbar war. Trotz des geringen Aufwands sind gleichzeitig die möglichen Störquellen reduziert. Da beide Strahlenhälften durch denselben Reflektor laufen, sind sie "optisch gekoppelt". Daher kann der Antrieb mit einem einfachen Gleichstrommotor ohne ein Störungen bewirkendes Getriebe oder irgendwelche Störungen auslösende Schrittsteuerungen erfolgen und ist damit auch technisch weniger aufwendig.

Nachfolgend wird die Erfindung anhand von bevorzugten Ausführungsformen unter Bezugnahme auf die anliegenden Zeichnungen im einzelnen erläutert. Es zeigen:

Nachfolgend wird die Erfindung anhand von bevorzugten Ausführungsformen unter Bezugnahme auf die anliegenden Zeichnungen im einzelnen erläutert. Es zeigen:

Fig.1      in Draufsicht eine schematische Darstellung einer Ausführungsform des erfindungsgemäßen Interferometers, und

Fig.2      ebenfalls in Draufsicht eine schematische Darstellung einer weiteren Ausführungsform eines erfindungsgemäßen Interferometers mit optimiertem Strahlengang.

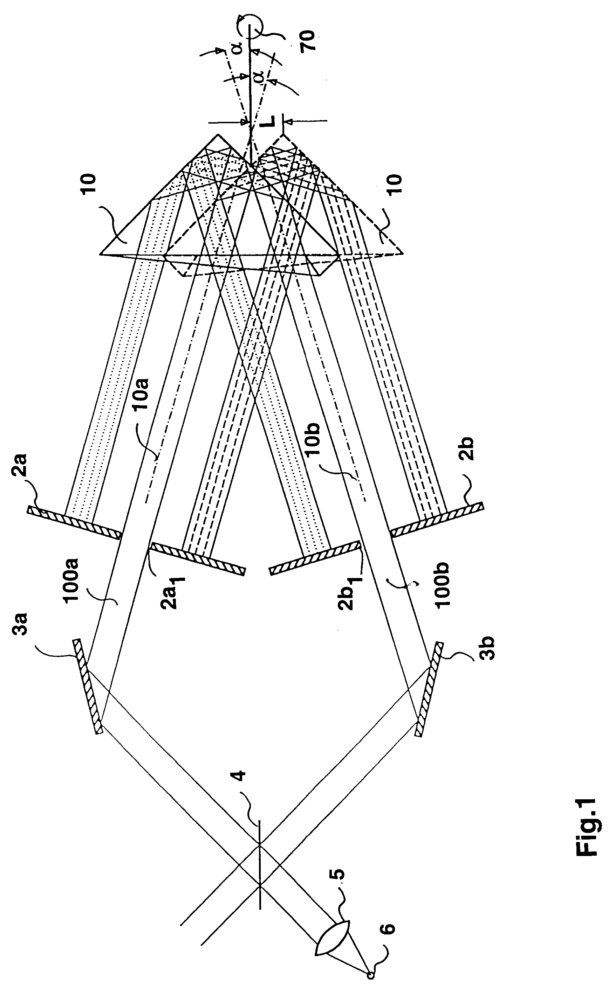

In Fig.1 ist in Draufsicht ein drehbarer Retroreflektor 10 in zwei extremen, ausgezogen bzw. gestrichelt wiedergegebenen Drehstellungen dargestellt, dessen Drehachse 70 bezogen auf den Tripelpunkt des Retroreflektors 10 seitlich um einen Abstand L versetzt ist. Ferner sind zwei Planspiegel 2a und 2b mit je einer konzentrischen Bohrung $2a_1$ bzw. $2b_1$ sowie zwei Umlenkspiegel 3a und 3b dargestellt. Außerdem sind optische Achsen 10a und 10b eingetragen, sowie ein Strahlteiler 4, eine Sammellinse 5 und ein Detektor 6 wiedergegeben. Der Neigungswinkel der optischen Achsen 10a und 10b gegenüber der Drehachse 70 ist mit $\alpha$ bezeichnet.

Das Interferometer in Fig.1 weist ferner die folgenden, aus Gründen der Übersichtlichkeit dort nicht wiedergegebenen Komponenten auf: einen (nicht dargestellten) Antriebsmotor, welcher den Retroreflektor 10 in bekannter Weise um die Drehachse 70 in Rotation versetzt, sowie eine bekannte Laserreferenz, die aus einem Laser, beispielsweise in Form eines HeNe-Lasers und aus einem Laserdetektor in Form einer strahlungsempfindlichen Silizium-Diode besteht.

Die auf den Strahlteiler 4 beispielsweise unter 45° auftreffende Strahlung wird in zwei zu den beiden optischen Achsen 10a und 10b jeweils symmetrische Hälften 100a und 100b zerlegt, welche auf die Planspiegel 3a bzw. 3b auftreffen, von diesen reflektiert werden, durch die Bohrungen $2a_1$ und $2b_1$ der Planspiegel 2a bzw. 2b hindurchtreten und auf jeweils verschiedenen Seiten der Drehachse 70 in den Reflektor 10 eintreten. Die Strahlenhälften verlassen den Retroreflektor jeweils parallel zur Eintrittsrichtung, treffen senkrecht auf die Planspiegel 2a bzw. 2b auf, werden von diesen in sich selbst zurückreflektiert und laufen daher auf demselben Weg zurück zum Strahlteiler 4.

Am Strahlteiler 4 rekombinieren die beiden Strahlenbündel in bekannter Weise und ihre Summe wird von der Sammellinse 5 auf den Detektor 6 fokussiert. Wegunterschiede zwischen den beiden Bezugsflächen der Strahlenhälften kommen dadurch zustande, daß sich durch die Rotation des Retroreflektors 10 die Weglängen für die beiden Strahlenhälften 100a und 100b gegensinnig ändern, wobei die Spiegelflächen 2a bzw. 2b als Bezugsflächen dienen.

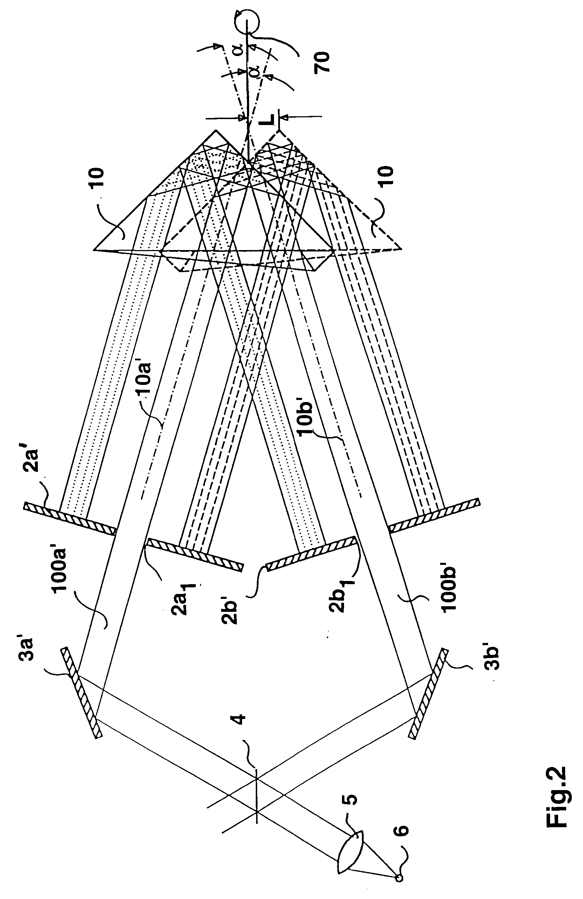

Die Anordnung in Fig.2 entspricht in allen Einzelheiten derjenigen in Fig.1 bis auf folgende Modifikation: In Fig.7 trifft ein einfallendes Strahlenbündel auf den Strahlteiler 4 unter einem Winkel von 30° zum Lot auf. Daher schließen die optischen Achsen 10a′ und 10b′ der beiden Strahlenbündel beim Verlassen des Strahlteilers 4 einen Winkel von 120° ein. Daher treffen die Strahlenbündel 100a′ und 100b′ unter einem Winkel, der um jeweils 7,5° steiler als bei der Ausführungsform der Fig.1 ist, auf die Umlenkspiegel 3a′ und 3b′, um unter dem Winkel $\alpha$ gegenüber der Drehachse 70 in den Retroreflektor 10 einzutreten. Auf diese Weise können kleinere Umlenkspiegel 3a′ und 3b′ verwendet und die Polarisationen an diesen reduziert werden.

Bei den in Fig.1 und 2 dargestellten Anordnungen läßt sich die spektrale Auflösung durch Veränderung des seitlichen Versatzes L der Drehachse 70 bezogen auf den Tripelpunkt des Retroreflektors 10 mechanisch einstellen. Bei einer Veränderung des Neigungswinkels $\alpha$ zur Einstellung der spektralen Auflösung müssen die übrigen Komponenten nachjustiert werden, insbesondere müssen auf jeden Fall die optischen Achsen 10a, 10b bzw. 10a′, 10b′ senkrecht auf den Spiegelflächen der Umlenkspiegel 2a, 2b bzw. 2a′, 2b′ stehen.

Die Neigungswinkel $\alpha$ der optischen Achsen 10a, 10b bzw. 10a′, 10b′ gegenüber der Drehachse 70, welche in der bisherigen Beschreibung immer als gleich angenommen worden waren, müssen nicht notwendig gleich sein, sondern durch unterschiedliche Neigungswinkel sind auch optische Wegdifferenzen einzustellen. In diesem Fall wird die Weglänge in diesem Arm bei der Rotation nicht mehr verändert. (Dies entspricht der Wirkungsweise der bekannten Ausführung eines Interferometers mit einem rotierenden und einem festen Retroreflektor).

Nachstehend wird ein Beispiel für die Dimensionierung der wichtigsten Parameter gegeben:

```
Nutzbare Apertur des Retroreflektors:               12.7cm
Seitlicher Versatz L der Drehachse:                 21mm
Winkel α zwischen den optischen Achsen
und der Drehachse:                                  18°;
Erzielter maximaler Wegunterschied:            etwa 10cm;
Erreichte spektrale Auflösung:                 besser als
                                               0,1cm⁻¹
```

**Patentansprüche**

1. Interferometer nach Michelson, mit zwei Planspiegeln (2a, 2b; 2a', 2b') mit einem rotierenden Retroreflektor (10) mit zugeordnetem Antriebsmotor, wobei die Retroreflektor-Drehachse (70) gegenüber dem Tripelpunkt des Retroreflektors (10) seitlich versetzt ist, mit zwei Umlenkspiegeln (3a, 3b; 3a', 3b'), einem Strahlteiler (4), einer Sammellinse (5), einem Detektor (6) und mit einer Laserreferenz-Einheit mit Laser und Laserdetektor, dadurch **gekennzeichnet**, daß der rotierende Retroreflektor (10) als einziger Retroreflektor für beide Interferometer-Zweige in der Weise angeordnet ist, daß beide durch den Strahlteiler (4) geteilten und auf je einen Umlenkspiegel (3a, 3b; 3a', 3b') auftreffenden Strahlenhälften (100a, 100b; 100a', 100b') in Apertur-Teilbereiche des einzigen Retroreflektors (10) gelenkt werden, welche bezogen auf die Retroreflektor-Drehachse (70), einander gegenüberliegen, wobei die optischen Achsen (10a, 10b; 10a', 10b') beider Strahlenhälften (100a, 100b; 100a', 100b') gegeneinander um einen Winkel von $2\alpha$ und gegenüber der Retroreflektor-Drehachse (70) jeweils um einen Neigungswinkel $\alpha$ geneigt sind.

**Claims**

1. A Michelson interferometer comprising two plane mirrors (2a, 2b; 2a', 2b') a rotating retroreflector (10) with associated drive motor, the retroreflector rotation axis (70) being laterally offset with respect to the triple point of the retroreflector (20) two deflecting mirrors (3a, 3b; 3a', 3b'), a beam splitter (4), a collecting lens (5), a detector (6) and a laser reference unit with laser and laser detector, wherein the rotating retroreflector (10) is arranged as sole retroreflector for two interferometer branches in such a manner that both beam halves (100a, 100b; 100a', 100b') split by the beam splitter (4) and incident on a respective deflecting mirror (3a, 3b; 3a', 3b') are deflected into aperture subregions of the single retroreflector (10) which lie opposite each other with respect to the retroreflector rotation axis (70) the optical axes (10a, 10b; 10a', 10b') of the two beam halves (100a, 100b; 100a', 100b') being inclined to each other an angle of $2\alpha$ and to the retroreflector rotation axis (70) an inclination angle $\alpha$.

**Revendications**

1. Interféromètre de Michelson comprenant deux miroirs plans (2a, 2b; 2a', 2b') avec un rétroréflecteur tournant (10) et un moteur d'entraînement associé, l'axe de rotation (70) du rétroréflecteur étant décalé latéralement par rapport au point triple du rétroréflecteur (10), comprenant deux miroirs de renvoi (3a, 3b; 3a', 3b'), un diviseur de faisceau (4), une lentille convergente (5), un détecteur (6) et une unité de référence laser comportant un laser et un détecteur de laser, caractérisé en ce que le rétroréflecteur tournant (10) est monté en tant qu'unique rétroréflecteur pour les deux branches de l'interféromètre de manière que les deux moitiés (100a, 100b; 100a', 100b') du faisceau subdivisé par le diviseur de faisceau (4) et parvenant chacune sur un miroir de renvoi (3a, 3b; 3a', 3b') soient dirigées vers des régions partielles de l'ouverture de l'unique rétroréflecteur (10), qui sont à l'opposé l'une de l'autre par rapport à l'axe de rotation (70) du rétroréflecteur, les axes optiques (10a, 10b; 10a', 10b') des deux moitiés de faisceau (100a, 100b; 100a', 100b') étant inclinés d'un angle $2\alpha$ l'un par rapport à l'autre et d'un angle d'inclinaison respectif $\alpha$ par rapport à l'axe de rotation (70) du rétroréflecteur.

**Fig.1**

EP 0 529 603 B1

**Fig.2**